# EUROPEAN PATENT SPECIFICATION

(11) **EP 3 554 280 B1**
(45) Date of publication and mention of the grant of the patent: **11.03.2020**
(21) Application number: 17797377.3
(22) Date of filing: 16.11.2017
(51) Int. Cl.: A23L 29/00, A23L 29/212, A23L 23/10

(54) **SAVOURY CONCENTRATE**
WÜRZKONZENTRAT
CONCENTRÉ SAVOUREUX

(30) Priority: 14.12.2016 EP 16204059
(43) Date of publication of application: 23.10.2019
(73) Proprietor: Unilever N.V., 3013 AL Rotterdam (NL); Unilever PLC, London, Greater London EC4Y 0DY (GB)
(72) Inventor: KARGIN, Fatma, Duygu, 34768 Umraniye / Istanbul (TR); KEIM, Florian, 74074 Heilbronn (DE); MELWITZ, Dieter, Werner, 74074 Heilbronn (DE); SAILER, Winfried, 74074 Heilbronn (DE)
(74) Representative: Tjon, Hon Kong Guno
(86) International application number: PCT/EP2017/079409
(87) International publication number: WO 2018/108431

(56) References cited:
- EP-A1- 1 419 699
- EP-A1- 1 419 700
- WO-A1-02/26051
- US-A1- 2005 281 935

## Description

### TECHNICAL FIELD OF THE INVENTION

The present invention relates to a savoury concentrate, more particularly a savoury concentrate that can be used as a base for the preparation of soups, sauces, gravies, bouillons, meals etc. The savoury concentrate of the present invention has a water activity (Aw) within the range of 0.15-0.6 and comprises:
a) 40-55 wt.% of fat component;
b) at least 3% by weight of the composition of crystalline salt selected from NaCl, KCl and combinations thereof;
c) 10-50 wt.% of particulate plant material selected from herbs, spices, vegetables and combinations thereof;
d) 0-22 wt.% of particulate starch component;
e) up to 10 wt.% of water; wherein the combination of components a) to e) constitutes at least 80 wt.% of the savoury concentrate, and wherein the fat component contains:
   - 4-20 wt.% of high melting triglycerides selected from PPP, POP and PPO wherein P represents palmitic acid and O represents oleic acid; and
   - 50-94 wt.% of low melting triglycerides selected from UUU, USU and UUS, wherein U represents unsaturated C₁₆₋₂₂ fatty acid and S represents saturated C₁₀₋₁₈ fatty acid.

The invention also relates to a method of preparing such a savoury concentrate.

### BACKGROUND OF THE INVENTION

Savoury concentrates are well-known in the art. These concentrates provide a convenient way of preparing, for instance, a soup or a sauce by mixing the concentrate with aqueous liquid. Examples of savoury concentrates include dry concentrates, such a dry soup and bouillon cubes, liquid concentrates such as condensed soups and more recently gelled concentrates. Savoury concentrates in the form of ambient stable pastes are also known.

US 6,376,004 describes soup- or sauce base, comprising (in percentages by weight):
- fat or oil, in an amount of 5-65%
- starch-based thickener, in an amount of 1-30%
- water, in amount of 10-55%
- egg-yolk based emulsifier, in an amount of 0.5-10%
- at least one water-activity-lowering component
- flavouring composition, in an amount of 1-35%,
- optionally acids
wherein the amount of the water-activity-lowering component(s) is such that the composition has a water activity of below 0.92 and wherein salt and starch are present in a ratio of at least 1:0.5 and at most 1:7.

WO 02/26051 describes the preparation of an edible composition comprising the following steps:
- cut vegetable matter to bring it in particulate form;
- mix with salt;
- remove part or all of the water liberated;
- mix the salted vegetable matter with fat.

Composition 3 of the patent examples contains:
- 37 wt.% fat base (94.9% soybean oil; 5.0% fully hydrogenated rapeseed oil and 0.1 wt.% lecithin)
- 48 wt.% salt treated onions;
- 6 wt.% salt;
- 6 wt.% sugar
- 3 wt.% flavouring ingredients.

EP-A 0 351 878 describes an oil based food product that comprises dried plant material that is impregnated with fatty liquid. Example 2 describes a product H having a water activity of 0.66 and containing:
- 43.3 wt.% fat (blend of palm oil, olive oil and butter fat)
- 11.7 wt.% water (including 3 wt.% from butter)
- 27.7 wt.% particulate crystalline component (15 wt.% salt and 12.7 wt.% sugar)
- 7.3 wt.% dried basil.

### SUMMARY OF THE INVENTION

The inventors have developed an ambient stable savoury concentrate that can suitably be used as a base for the preparation of, for instance, soups, sauces, gravies, bouillons and meals. The savoury concentrate of the present invention combines a number of desirable properties. The concentrate does not form lumps, can easily be dispersed into water and has desirable melting properties. Furthermore, it can easily be squeezed out of a flexible package (e.g. a pouch) or be scooped out of a rigid container. In a sealed package the concentrate has an ambient shelf-life of several months. The concentrate does not exhibit significant oil exudation or phase separation during storage, transport or when it is squeezed out of a package. Finally, the present concentrate can be mixed with water to produce a savoury creamy base comprises particles plant material.

The savoury concentrate according to the present invention has a water activity (A_{w}) within the range of 0.15-0.6 and comprises:
a) 40-55 wt.% of fat component, said fat component having a solid fat content at 20°C (N₂₀) of 6-20%;
b) 3-30 wt.% of a particulate crystalline component selected from NaCl, KCI, sucrose, monosodium glutamate and combinations thereof, including at least 3% by weight of the composition of crystalline salt selected from NaCl, KCI and combinations thereof;
c) 10-50 wt.% of particulate plant material selected from herbs, spices, vegetables and combinations thereof;
d) 0-22 wt.% of particulate starch component;
e) up to 10 wt.% of water;
   wherein the combination of components a) to e) constitutes at least 80 wt.% of the savoury concentrate, and wherein the fat component contains:
   - 4-20 wt.% of high melting triglycerides selected from PPP, POP and PPO wherein P represents palmitic acid and O represents oleic acid; and
   - 50-94 wt.% of low melting triglycerides selected from UUU, USU and UUS, wherein U represents unsaturated C₁₆₋₂₂ fatty acid and S represents saturated C₁₀₋₁₈ fatty acid.

Although the inventors do not wish to be bound by theory, it is believed that the advantageous properties of the savoury concentrate are the result of an optimum balance between the fat component and the at least two particulate components of the concentrate, i.e. the crystalline component and the plant material, the low water content and the special nature of the fat component that is employed. The fat component in the concentrate provides sufficient solid fat at ambient temperature to prevent oil exudation and phase separation. At the same time, the fat component provides enough liquid oil at ambient temperature to give a smooth texture and good squeezability. The fat component further offers the advantage that the ratio of solid fat to liquid oil is relatively constant within the temperature range at which the concentrate is typically used and stored (10-30°C). Thus, the aforementioned advantageous properties of the savoury concentrate are not significantly affected by temperature variations within the aforementioned temperature range.

The invention also provides a method of preparing the aforementioned savoury concentrate, said method comprising the steps of:
- mixing a liquid vegetable oil component, a particulate crystalline component and a particulate plant material to produce a slurry, the liquid vegetable oil being selected from sunflower oil, soybean oil, rapeseed oil, maize oil, cottonseed oil, safflower oil, olive oil, palm olein and combinations thereof;
- combining the slurry with a palm fat component selected from palm stearin, palm super stearin, palm mid fraction and combinations thereof; and
- mixing the combination of slurry and palm fat component.

The invention further provides a process of preparing a meal, said process comprising the steps of mixing 10 parts by weight of the savoury concentrate according to the present invention with 10-500 parts by weight of other meal components.

### DETAILED DESCRIPTION OF THE INVENTION

A first aspect of the present invention relates to a savoury concentrate having a water activity (A_{w}) within the range of 0.15-0.6, said concentrate comprising:
a) 40-55 wt.% of fat component, said fat component having a solid fat content at 20°C (N₂₀) of 6-20%;
b) 3-30 wt.% of a particulate crystalline component selected from NaCl, KCI, sucrose, monosodium glutamate and combinations thereof, including at least 3% by weight of the composition of crystalline salt selected from NaCl, KCI and combinations thereof;
c) 10-50 wt.% of particulate plant material selected from herbs, spices, vegetables and combinations thereof;
d) 0-22 wt.% of particulate starch component;
e) up to 10 wt.% of water;
   wherein the combination of components a) to e) constitutes at least 80 wt.% of the savoury concentrate, and wherein the fat component contains:
   - 4-20 wt.% of high melting triglycerides selected from PPP, POP and PPO wherein P represents palmitic acid and O represents oleic acid; and
   - 50-94 wt.% of low melting triglycerides selected from UUU, USU and UUS, wherein U represents unsaturated C₁₆₋₂₂ fatty acid and S represents saturated C₁₀₋₁₈ fatty acid.

The term "fat component" as used herein refers to glycerides selected from triglycerides, diglycerides, monoglycerides, fatty acids, phosphoglycerides and combinations thereof.

The term "starch component" as used herein refers to a material having a starch content of at least 50 wt.%. Examples of starch components include native starch, pregelatinized starch, cereal flour and combinations thereof.

The term "particulate" as used herein in relation to a material, refers to a material that consists of discrete particles, preferably discrete particles having a particle size of at least 10 µm. Particle size distributions of particulate components can suitably be determined with a set of sieves of different mesh sizes.

Whenever reference is made herein to water content, unless indicated otherwise, said water content includes unbound (free) as well as bound water.

The solid fat content of fat at 20°C (N₂₀) or at other temperatures can suitably be determined using the method described in Animal and vegetable fats and oilsDetermination of solid fat content by pulsed NMR -- Part 1: Direct method - ISO 8292-1:2008.

The savoury concentrate according to the present invention is an edible product. Consequently, also the ingredients of the savoury concentrate are all edible ingredients.

According to a particularly preferred embodiment, the savoury concentrate of the present invention is a paste, i.e. a very thick viscous fluid.

The savoury concentrate preferably has a water activity in the range of 0.20 to 0.55, more preferably in the range of 0.23 to 0.52 and most preferably in the range of 0.25 to.0.50.

The fat component is preferably contained in the savoury concentrate in a concentration of 41-52 wt.%, more preferably of 42-50 wt.%.

The fat component preferably has a solid fat content at 20°C (N₂₀) of 8-18%, more preferably of 9-15%. The solid fat content of the fat component at 30°C (N₃₀) is preferably in the range of 7-17%, more preferably in the range of 8-14%.

High melting triglycerides selected from PPP, POP and PPO preferably constitute 5-18 wt.%, more preferably 6-15 wt.% of the fat component.

Low melting triglycerides selected from UUU, USU and UUS preferably constitute 60-93 wt.%, more preferably 70-92 wt.% of the fat component.

According to a particularly preferred embodiment, the fat component of the savoury concentrate contains 4-15 wt.%, preferably 6-13 wt.% of PPP triglyceride.

Besides PPP triglyceride the fat component preferably contains not more than a limited amount of trisaturated triglycerides wherein the saturated fatty acid residues are saturated C₁₈₋₂₂ fatty acid residues. Accordingly, in a preferred embodiment, the fat component contains less than 2 wt.%, preferably less than 1 wt.% of trisaturated triglycerides in which the saturated fatty acid residues are selected from saturated C₁₈₋₂₂ fatty acid residues. In an even more preferred embodiment, the fat component contains less than 2 wt.%, preferably less than 1 wt.% of trisaturated triglycerides in which at least 2 of the 3 saturated fatty acid residues are selected from saturated C₁₈₋₂₂ fatty acid residues.

The fat component typically contains at least 40 wt.%, more preferably at least 45 wt.% and most preferably at least 50 wt.% of UUU triglycerides.

The PPP triglyceride in the fat component can be provided by a palm oil component, especially a high melting palm oil fraction. Accordingly, in a preferred embodiment the fat component in the savoury concentrate preferably comprises 8-25 wt.%, more preferably 10-20 wt.%, most preferably 12-18 wt.% of a palm oil component selected from palm stearin, palm super stearin, palm mid fraction and combinations thereof.

The UUU triglycerides in the fat component can suitably be provided by a liquid vegetable oil that is high in unsaturated fatty acids. Accordingly, in a preferred embodiment, the fat component comprises 50-92 wt.%, more preferably 60-90 wt.% and most preferably 70-88 wt.% of a liquid vegetable oil selected from sunflower oil, soybean oil, rapeseed oil, maize oil, olive oil, cottonseed oil, safflower oil, palm olein and combinations thereof.

The savoury concentrate preferably contains at least 10 wt.%, more preferably at least 15 wt.% of the particulate crystalline component.

The fat component of the savoury concentrate preferably does not contain hydrogenated fat.

Crystalline salt selected from NaCl, KCI and combinations thereof is typically contained in the savoury concentrate in a concentration of at least 4 wt.%, more preferably of at least 5 wt.% and most preferably of at least 7 wt.%

According to another preferred embodiment the savoury concentrate contains at least 3 wt.%, more preferably at least 5 wt.% of the particulate crystalline component having a diameter in the range of 30 to 2,000 micrometer.

The savoury concentrate preferably contains 12-47 wt.%, more preferably 15-45 wt.% and most preferably 20-40 wt.% of particulate plant material selected from herbs, spices, vegetables and combinations thereof.

Preferably, the savoury concentrate contains at least 12 wt.%, more preferably at least 15 wt.% of the particulate plant material having a diameter in the range of 50 to 3,000 micrometer, more preferably in the range of 80 to 1,000 micrometer and most preferably in the range of 100 to 500 micrometer.

Inclusion of a high level of coarse particulate plant material can have an adverse effect on the properties of the savoury concentrate, such as squeezability. Accodingly, the savoury concentrate preferably contains not more than 5 wt.% of particulate plant material having a diameter of more than 1,000 micrometer. Even more preferably, the concentrate contains not more than 5 wt.% of particulate plant material having a diameter of more than 500 micrometer

The particulate starch component preferably is selected from particulate native starch, particulate physically modified starch, wheat flour, corn flour, rice flour, legumes flour and combinations thereof. More preferably, the particulate starch component is selected from particulate physically modified starch, wheat flour and combinations thereof.

The term "native starch" as used herein refers to non-gelatinized starch. The term native starch encompasses, for instance, heat moisture treated starches and annealed starches.

Preferably, the savoury concentrate contains at least 0.1 wt.%, more preferably 1-20 wt.%, even more preferably 3-18 wt.% and most preferably 5-15 wt.% of the particulate starch component.

Typically, the concentrate contains not more than 6 wt.% cereal flour.

The combination of components a) to e) preferably constitutes at least 85 wt.%, more preferably at least 88 wt.% of the savoury concentrate. Besides components a) to e) the savoury concentrate may suitably contain a wide range of other ingredients such as monosodium glutamate, meat extracts, yeast extract, hydrolysed vegetable protein, flavouring and colorants.

The water content of the savoury concentrate preferably does not exceed 7 wt.%, most preferably it does not exceed 5 wt.%.

In another advantageous embodiment, the savoury concentrate contains 0.1-20 wt.%, more preferably 1-15 wt.% of taste contributing components selected from glutamic acid, 5'-ribonucleotides, hydrolysed vegetable protein, lactic acid, citric acid, acetic acid and combinations thereof, by weight of the total concentrate.

Another aspect of the present invention relates to a method of preparing the savoury concentrate according to the present invention, said method comprising the steps of:
- mixing a liquid vegetable oil component, a particulate crystalline component and a particulate plant material to produce a slurry, the liquid vegetable oil being selected from sunflower oil, soybean oil, rapeseed oil, maize oil, olive oil, cottonseed oil, safflower oil, palm olein and combinations thereof;
- combining the slurry with a palm fat component selected from palm stearin, palm super stearin, palm mid fraction and combinations thereof; and
- mixing the combination of slurry and palm fat component.

The savoury concentrate that is obtained by the present method is preferably filled into a pouch or a sachet.

Yet another aspect of the invention relates to a process of preparing a meal, said process comprising the steps of mixing 1 parts by weight of the savoury concentrate according to the present invention with 1-50 parts by weight of other meal components.

Preferably, 1 part by weight of the savoury concentrate is mixed with 1-40 parts by weight of aqueous liquid. Examples of ready-to-eat products that can be prepared in this manner include soups, sauces, gravies, bouillons and meals.

According to one embodiment, the savoury concentrate is mixed with hot aqueous liquid having a temperature of at least 50°C, preferably of at least 70°C.

In accordance with another embodiment, the savoury concentrate is mixed with cold water having a temperature of less than 30°C and the resulting mixture is subsequently heated to a temperature in excess of 70°C.

Preferably, the present process comprises mixing 1 part by weight of the savoury concentrate with 4-20 parts by weight of aqueous liquid.

The aqueous liquid that is mixed with the savoury concentrate typically contains at least 70 wt.%, more preferably at least 80 wt.% of water.

The invention is further illustrated by the following non-limiting examples.

### EXAMPLES

### Evaluation methods

### Paste strength measurement

### Equipment:

- Texture Analyser TA - XT2 plus (Stable Micro Systems Ltd) with a alu probe of 25mm diameter.
- Plastic beaker Ø 5,2cm filled with sample to exact 5 cm height (approx.. 100ml) Sample preparation:
- Samples are analyzed 3 days after production
- The samples are stored in dark storage at 20°C

### Parameter:

- Measuring tool: Cylindrical finger probe (25mm alu diameter)
- Mode: Measure Force in Compression
- Option: Return to Start
- Pre - Test Speed: 1,0 mm/s
- Test Speed: 0,5 mm/s
- Post - Test Speed: 10 mm/s
- Distance: 20 mm
- Trigger force: 0,5 g

### Measurement:

- The paste strength corresponds to the maximum force needed to achieve the target penetration distance
- In the plastic beaker

### Oiling out measurement

### Equipment:

- Glass beaker Ø 6,5cm, filled with 200g sample
- Pipet
- Scale

### Sample preparation:

- Samples are analyzed 4 weeks after production
- The samples are stored in dark storage at 20°C

### Measurement:

- Weigh the glass jar with the paste, soak up the separated oil with the pipet from surface of the paste, weigh the glass jar and paste after separating the oil; calculate amount of separated oil based on total paste amount of 200 g.

### Lumping test

### Equipment:

- Kenwood Cooking Chef
- Stop Watch

### Sample preparation:

- 100 g cream + 150 g water + 50 g paste
- After preparation samples are stored at 20°C in the dark for at least 24 hours before analysis

### Procedure:

- Heating cream and water to 80°C under stirring with 50 rpm
- Adding 50g paste, heating to 100°C while stirring 30 sec with 50 rpm
- Change stirring to 5 sec stirring and 5 sec break for 30 sec
- Change stirring to 5 sec stirring and 30 sec break for 120 sec Measurement:
- Sieve product through a sieve with 1mm mesh and check visually if lumps are visible

### Melting test

### Equipment:

- IKA RCT basic heating plate
- Magnetic stirrer
- Frying pan Ø 18cm
- Infrared thermometer Testo 830-T1
- Stop watch
- Metal ring Ø 15cm

### Sample preparation:

- After preparation samples are stored at 20°C in the dark for at least 24 hours before analysis

### Parameter:

- Set heat to 200°C at the heating plate, center the frying pan, center metal ring in pan
- As soon as temperature of 125°C is reached on the surface of the pan, add 50 g paste in the center of the metal ring
- Continue heating for 5 minutes without any stirring or movement

### Measurement:

- Visually check if paste is completely melted, which is achieved when the melted paste covering at least 90 % of the ring interior
- Visually check if paste is partially melted, which is achieved when the melted paste covering at least 70 % of the ring interior

### Example 1

A savoury concentrate was prepared on the basis of the recipe that is shown in Table 1.

**Table 1**

| **Ingredients** | **Wt.%** |
|---|---|
| Fat blend | 46.5 |
| Salt (0.003-2.0 mm) | 12.5 |
| Sugar (0.1-1.25 mm) | 6.2 |
| Onion powder (0.4-0.5 mm) | 10.1 |
| Tomato powder (0.125-0.5 mm) | 10.4 |
| Paprika powder (0.25-1.0 mm) | 10.1 |
| Starch HF ¹ (0.015-0.1 mm) | 4.2 |

| | |
|---|---|
| ¹ Heat-moisture treated potato starch | |

The composition of the fat blend and is shown in Table 2.

**Table 2**

| | **Wt.%** |
|---|---|
| Palm super stearin (IV = 14) | 15.0 |
| Sunflower oil | 85.0 |
| | |
| PPP | 9.1 |
| POP | 1.9 |
| PPO | 0.3 |
| UUU | 54.6 |
| USU + UUS | 24.3 |

| | |
|---|---|
| P = palmitic acid O = oleic acid U = C₁₆₋₂₂ unsaturated fatty acid S = C₁₀₋₁₈ saturated fatty acid | |

The solid fat profile of the fat component is shown in Table 3.

**Table 3**

| | |
|---|---|
| N₁₀ | 16% |
| N₂₀ | 14% |
| N₃₀ | 11% |
| N₃₅ | 9% |
| N₄₀ | 7% |

The savoury concentrate was prepared as follows:
4 kg of fat blend was prepared in a Unimix LM6 mixer:
- Sunflower oil was introduced into the mixer
- Vacuum was set to 400 mbar
- Stirrer was rotated at 100 rpm
- Oil was cooled to 20°C via double jacket
- In a separate vessel the palm super stearin was melted by heating it to 75°C
- Stirrer speed was increased to 6,000 rpm
- The molten palm super stearin (75°C) was soaked in at a rate of appr. 1400 g/minute
- After all stearin had been added, the fat mixture was stirred for another 30 seconds

The savoury concentrate (7 kg) was prepared in a vacuum processing vessel (Brogtec MH 20) as follows:
- The fat blend (appr. 35°C) was introduced into the vessel
- A dry mix of the powder ingredients (20°C) was added to the fat blend
- Pressure was reduced to 700 mbar
- The contents of the vessel were stirred at 20 rpm for 180 sec
- The resulting paste was removed

The savoury concentrate was evaluated using the test method described earlier. The results are shown in Table 12.

### Comparative Example A

The influence of the fat component on the quality of the savoury concentrate was investigated by preparing savoury concentrates on the basis of the recipes shown in Table 4.

**Table 4**

| **Ingredients** | **Wt.%** | | | |
|---|---|---|---|---|
| | **1** | **2** | **3** | **4** |
| Fat blend 1 | 35.0 | 60.0 | | |
| Fat blend 2 | | | 46.5 | |
| Fat blend 3 | | | | 46.5 |
| Salt | 15.2 | 9.4 | 12.5 | 12.5 |
| Sugar | 7.5 | 4.6 | 6.2 | 6.2 |
| Onion powder | 12.3 | 7.6 | 10.1 | 10.1 |
| Tomato powder | 12.7 | 7.8 | 10.4 | 10.4 |
| Paprika powder | 12.3 | 7.6 | 10.1 | 10.1 |
| Starch HF | 5.1 | 3.1 | 4.2 | 4.2 |

The compositions of the fat blends 1, 2 and 3 are shown in Table 5.

**Table 5**

| | **Wt.%** | | |
|---|---|---|---|
| | **Sunflower oil** | **Palm super stearin (IV=14)** | **N₂₀** |
| Fat blend 1 | 85.0 | 15.0 | 14 |
| Fat blend 2 | 95.5 | 4.5 | 4 |
| Fat blend 3 | 75.0 | 25.0 | 23 |

The triglyceride compositions of the fat blends 1, 2 and 3 are shown in Table 6.

**Table 6**

| | **Wt.%** | | |
|---|---|---|---|
| | **1** | **2** | **3** |
| PPP | 9.1 | 2.7 | 15.1 |
| POP | 1.9 | 0.7 | 3.0 |
| PPO | 0.3 | 0.1 | 0.5 |
| UUU | 54.6 | 62.2 | 49.1 |
| USU + UUS | 24.3 | 27.5 | 22.1 |

The savoury concentrates were prepared using the procedure described in Example 1.

Next, the concentrates were evaluated using the test method described earlier. The results are shown in Table 11.

### Comparative Example B

The influence of the particulate crystalline component and water content on the quality of the savoury concentrate was investigated by preparing savoury concentrates on the basis of the recipes shown in Table 7. The ingredients used were the same as in Example 1.

**Table 7**

| **Ingredients** | **Wt.%** | |
|---|---|---|
| | **1** | **2** |
| Fat blend | 46.5 | 46.5 |
| Salt | 26.8 | 9.6 |
| Sugar | 13.2 | 4.7 |
| Onion powder | 3.9 | 7.8 |
| Tomato powder | 4.0 | 8.0 |
| Paprika powder | 3.9 | 7.8 |
| Starch HF | 1.6 | 3.2 |
| Added water | | 12.5 |
| | | |
| Overall water content | 2.5 | 15.0 |

The savoury concentrates were prepared using the procedure described in Example 1.

Next, the concentrates were evaluated using the test method described earlier. The results are shown in Table 12.

### Comparative Example C

A savoury concentrate was prepared on the basis of the recipe shown in Table 8. The ingredients used were the same as in Example 1.

**Table 8**

| **Ingredients** | **Wt.%** |
|---|---|
| Fat blend | 35.0 |
| Salt | 2.0 |
| Sugar | 1.0 |
| Onion powder | 13.2 |
| Tomato powder | 13.6 |
| Paprika powder | 13.2 |
| Starch HF | 22.0 |

The savoury concentrate was prepared using the procedure described in Example 1. The concentrate was evaluated using the test method described earlier. The results are shown in Table 12.

### Example 2

A savoury concentrate was prepared on the basis of the recipe shown in Table 9. The ingredients used were the same as in Example 1.

**Table 9**

| **Ingredients** | **Wt.%** |
|---|---|
| Fat blend | 46.50 |
| Salt | 12.53 |
| Sugar | 6.17 |
| Onion powder | 8.19 |
| Tomato powder | 8.44 |
| Paprika powder | 8.19 |
| Starch HF | 10.00 |

The savoury concentrate was prepared using the procedure described in Example 1.

Next, the concentrate was evaluated using the test method described earlier. The results are shown in Table 12.

### Example 3

A savoury concentrate was prepared on the basis of the recipes shown in Table 10. The non-fat ingredients used were the same as in Example 1.

**Table 10**

| **Ingredients** | **3.1** | **3.2** | **3.3** | **3.4** |
|---|---|---|---|---|
| Fat blend 1 (N₂₀=14%) ¹ | 46.50 | | | 48.0 |
| Fat blend 2 (N₂₀=10%) ² | | 46.50 | | |
| Fat blend 3 (N₂₀=17%) ³ | | | 46.50 | |
| Salt ⁴ | 3.35 | 3.35 | 18.09 | 7.37 |
| Sugar ⁴ | 1.65 | 1.65 | 8.91 | 3.63 |
| Onion powder ⁴ | 13.20 | 13.20 | 6.60 | 7.59 |
| Tomato powder ⁴ | 13.60 | 13.60 | 6.80 | 7.82 |
| Paprika powder ⁴ | 13.20 | 13.20 | 6.60 | 7.59 |
| Pieces ⁵ | | | | 3.0 |
| Starch HF ⁴ | 8.50 | 8.50 | 6.50 | 15.0 |

| | | | | |
|---|---|---|---|---|
| ¹ Same fat blend as in Example 1 ² Blend (90:10) of sunflower oil and palm super stearin (IV=14) ³ Blend (82:18) of sunflower oil and palm super stearin (IV=14) ⁴ As in Example 1 ⁵ 40% carrot 1-2mm; 20% champignon 2-6mm; 30% bell pepper 1-3mm; 10% parsley 2-4mm | | | | |

The triglyceride compositions of the fat blends 1, 2 and 3 are shown in Table 11.

**Table 11**

| | **Wt.%** | | |
|---|---|---|---|
| | **1** | **2** | **3** |
| PPP | 9.1 | 6.0 | 10.9 |
| POP | 1.9 | 1.3 | 2.2 |
| PPO | 0.3 | 0.1 | 0.4 |
| UUU | 54.6 | 62.2 | 53.5 |
| USU + UUS | 24.3 | 26.2 | 24.4 |

The savoury concentrates were prepared using the procedure described in Example 1.

Next, the concentrates were evaluated using the test method described earlier. The results are shown in Table 12.

**Table 12**

| | **1** | **A.1** | **A.2** | **A.3** | **A.4** | **B.1** | **B.2** | **C** | **2** | **3.1** | **3.2** | **3.3** | **3.4** |
|---|---|---|---|---|---|---|---|---|---|---|---|---|---|
| Fat (wt.%) | 46.5 | 35.0 | 60.0 | 46.5 | 46.5 | 46.5 | 46.5 | 35.0 | 46.5 | 46.5 | 46.5 | 46.5 | 48.0 |
| Particulate crystalline component (wt.%) | 18.7 | 22.7 | 14.0 | 18.7 | 18.7 | 40.0 | 14.3 | 3.0 | 18.7 | 5.0 | 5.0 | 27.0 | 11.0 |
| Particulate plant material (wt.%) | 30.7 | 37.2 | 23.0 | 30.7 | 30.7 | 11.9 | 23.5 | 40.0 | 24.8 | 40.0 | 40.0 | 20.0 | 23.0 |
| Pieces (wt.%) | 0.0 | 0.0 | 0.0 | 0.0 | 0.0 | 0.0 | 0.0 | 0.0 | 0.0 | 0.0 | 0.0 | 0.0 | 3.0 |
| Starch component (wt.%) | 4.2 | 5.0 | 3.0 | 4.2 | 4.2 | 1.6 | 3.2 | 22.0 | 10.0 | 8.5 | 8.5 | 6.5 | 15.0 |
| | | | | | | | | | | | | | |
| N₂₀ (%) | 14 | 14 | 14 | 4 | 23 | 14 | 14 | 14 | 14 | 14 | 10 | 17 | 14 |
| | | | | | | | | | | | | | |
| Paste strength ¹ (g) | 100 | 1,222 | 40 | 23 | 236 | 34 | 34 | 262 | 41 | 170 | 41 | 150 | 95 |
| Oiling out ² | 2% | 0% | 6% | 11% | 0% | 7% | 0% | 0% | 5% | <1% | <5% | <1% | <5% |
| Lumping test ³ | + | + | + | + | + | + | + | - | + | + | + | + | + |
| Melting test ⁴ | + | -- | + | + | - | -- | -- | -- | + | + | + | + | + |

| | | | | | | | | | | | | | |
|---|---|---|---|---|---|---|---|---|---|---|---|---|---|
| ¹ Acceptable paste strength: 40-200 g ² Acceptable oiling out: ≤5% ³ + = no lumping; - = unacceptable lumping ⁴ + = >90% melted; - = 70-90% melted; -- = <70% melted | | | | | | | | | | | | | |

## Claims

1. A savoury concentrate having a water activity (A_{w}) within the range of 0.15-0.6, said concentrate comprising:
a) 40-55 wt.% of fat component, said fat component having a solid fat content at 20°C (N₂₀) of 6-20%;
b) 3-30 wt.% of a particulate crystalline component selected from NaCl, KCI, sucrose, monosodium glutamate and combinations thereof, including at least 3% by weight of the composition of crystalline salt selected from NaCl, KCI and combinations thereof;
c) 10-50 wt.% of particulate plant material selected from herbs, spices, vegetables and combinations thereof;
d) 0-22 wt.% of particulate starch component;
e) up to 10 wt.% of water;
wherein the combination of components a) to e) constitutes at least 80 wt.% of the savoury concentrate, and wherein the fat component contains:
• 4-20 wt.% of high melting triglycerides selected from PPP, POP and PPO wherein P represents palmitic acid and O represents oleic acid; and
• 50-94 wt.% of low melting triglycerides selected from UUU, USU and UUS, wherein U represents unsaturated C₁₆₋₂₂ fatty acid and S represents saturated C₁₀₋₁₈ fatty acid.

2. Savoury concentrate according to claim 1, wherein the savoury concentrate has a water activity of less than 0.45.

3. Savoury concentrate according to any one of the preceding claims, wherein the savoury concentrate contains at least 10 wt.%, preferably at least 15 wt.% of the particulate crystalline component.

4. Savoury concentrate according to any one of the preceding claims, wherein the savoury concentrate contains at least 3 wt.% of the particulate crystalline component having a diameter in the range of 30 to 1,000 micrometer.

5. Savoury concentrate according to any one of the preceding claims, wherein the savoury concentrate contains at least 4 wt.%, preferably at least 5. wt.% of salt selected from NaCl, KCI and combinations thereof.

6. Savoury concentrate according to any one of the preceding claims, wherein the savoury concentrate contains at least 0.1 wt.% of particulate starch component.

7. Savoury concentrate according to claim 6, wherein the particulate starch component is physically modified starch.

8. Savoury concentrate according to any one of the preceding claims, wherein the combination of components a) to e) represents at least 85 wt.%, preferably at least 88 wt.% of the savoury concentrate.

9. Savoury concentrate according to any one of the preceding claims, wherein the fat component contains 4-15 wt.%, preferably 6-13 wt.% of PPP triglyceride.

10. Savoury concentrate according to any one of the preceding claims, wherein the fat component contains at least 40 wt.% of UUU triglyceride.

11. Savoury concentrate according to any one of the preceding claims, wherein the fat component comprises 8-25 wt.% of a palm oil component selected from palm stearin, palm super stearin, palm mid fraction and combinations thereof.

12. Savoury concentrate according to any one of the preceding claims, wherein the fat component comprises 50-92 wt.% of a liquid vegetable oil selected from sunflower oil, soybean oil, rapeseed oil, maize oil, olive oil, cottonseed oil, safflower oil, palm olein and combinations thereof.

13. Savoury concentrate according to any one of the preceding claims, said concentrate having a water activity (A_{w}) within the range of 0.25-0.50, said concentrate comprising:
a) 42-50 wt.% of fat component, said fat component having a solid fat content at 20°C (N₂₀) of 9-15%;
b) 7-30 wt.% of a particulate crystalline component selected from NaCl, KCI, sucrose, monosodium glutamate and combinations thereof, including at least 3% by weight of the composition of crystalline salt selected from NaCl, KCI and combinations thereof;
c) 15-50 wt.% of particulate plant material selected from herbs, spices, vegetables and combinations thereof;
d) 5-15 wt.% of particulate starch component;
e) up to 5 wt.% of water;
wherein the combination of components a) to e) constitutes at least 88 wt.% of the savoury concentrate, and wherein the fat component contains:
• 6-15 wt.% of high melting triglycerides selected from PPP, POP and PPO wherein P represents palmitic acid and O represents oleic acid; and
• 70-92 wt.% of low melting triglycerides selected from UUU, USU and UUS, wherein U represents unsaturated C₁₆₋₂₂ fatty acid and S represents saturated C₁₀₋₁₈ fatty acid.

14. A method of preparing the savoury concentrate according to any one of the preceding claims, said method comprising the steps of:
• mixing a liquid vegetable oil component, a particulate crystalline component and a particulate plant material to produce a slurry, the liquid vegetable oil being selected from sunflower oil, soybean oil, rapeseed oil, maize oil, olive oil, cottonseed oil, safflower oil, palm olein and combinations thereof;
• combining the slurry with a palm fat component selected from palm stearin, palm super stearin, palm mid fraction and combinations thereof; and
• mixing the combination of slurry and palm fat component.

15. A process of preparing a meal, said process comprising the steps of mixing 1 parts by weight of the savoury concentrate according to any one of claims 1-13 with 1-50 parts by weight of other meal components.

## Patentansprüche

1. Würzkonzentrat mit einer Wasseraktivität (A_{w}) innerhalb des Bereichs von 0,15-0,6, wobei das Konzentrat umfasst:
a) 40-55 Gew.-% Fettkomponente, wobei die Fettkomponente einen Festfettgehalt bei 20°C (N₂₀) von 6-20% aufweist;
b) 3-30 Gew.-% einer teilchenförmigen kristallinen Komponente, ausgewählt unter NaCl, KCl, Saccharose, Mononatriumglutamat und Kombinationen davon, einschließlich mindestens 3 Gew.-% der Zusammensetzung an kristallinem Salz, ausgewählt unter NaCl, KCl und Kombinationen davon;
c) 10-50 Gew.-% teilchenförmiges Pflanzenmaterial, ausgewählt unter Kräutern, Gewürzen, Gemüse und Kombinationen davon;
d) 0-22 Gew.-% teilchenförmige Stärkekomponente;
e) bis zu 10 Gew.-% Wasser;
wobei die Kombination der Komponenten a) bis e) mindestens 80 Gew.-% des Würzkonzentrats ausmacht und wobei die Fettkomponente enthält:
• 4-20 Gew.-% hochschmelzende Triglyceride, ausgewählt unter PPP, POP und PPO, worin P Palmitinsäure und O Ölsäure darstellt; und
• 50-94 Gew.-% niedrigschmelzende Triglyceride, ausgewählt unter UUU, USU und UUS, worin U ungesättigte C₁₆-C₂₂-Fettsäure darstellt und S gesättigte C₁₀-C₁₈-Fettsäure darstellt.

2. Würzkonzentrat nach Anspruch 1, wobei das Würzkonzentrat eine Wasseraktivität von weniger als 0,45 aufweist.

3. Würzkonzentrat nach irgendeinem der vorhergehenden Ansprüche, wobei das Würzkonzentrat mindestens 10 Gew.-%, vorzugsweise mindestens 15 Gew.-% der teilchenförmigen kristallinen Komponente enthält.

4. Würzkonzentrat nach irgendeinem der vorhergehenden Ansprüche, wobei das Würzkonzentrat mindestens 3 Gew.-% der teilchenförmigen kristallinen Komponente mit einem Durchmesser in dem Bereich von 30 bis 1.000 Mikrometer enthält.

5. Würzkonzentrat nach irgendeinem der vorhergehenden Ansprüche, wobei das Würzkonzentrat mindestens 4 Gew.-%, vorzugsweise mindestens 5 Gew.-% Salz, ausgewählt unter NaCl, KCl und Kombinationen davon, enthält.

6. Würzkonzentrat nach irgendeinem der vorhergehenden Ansprüche, wobei das Würzkonzentrat mindestens 0,1 Gew.-% der teilchenförmigen Stärkekomponente enthält.

7. Würzkonzentrat nach Anspruch 6, wobei die teilchenförmige Stärkekomponente physikalisch modifizierte Stärke ist.

8. Würzkonzentrat nach irgendeinem der vorhergehenden Ansprüche, wobei die Kombination der Komponenten a) bis e) mindestens 85 Gew.-%, vorzugsweise mindestens 88 Gew.-% des Würzkonzentrats darstellt.

9. Würzkonzentrat nach irgendeinem der vorhergehenden Ansprüche, wobei die Fettkomponente 4-15 Gew.-%, vorzugsweise 6-13 Gew.-% PPP-Triglycerid enthält.

10. Würzkonzentrat nach irgendeinem der vorhergehenden Ansprüche, wobei die Fettkomponente mindestens 40 Gew.-% UUU-Triglycerid enthält.

11. Würzkonzentrat nach irgendeinem der vorhergehenden Ansprüche, wobei die Fettkomponente 8-25 Gew.-% einer Palmölkomponente umfasst, ausgewählt unter Palmstearin, Palmsuperstearin, Palmmittelfraktion und Kombinationen davon.

12. Würzkonzentrat nach irgendeinem der vorhergehenden Ansprüche, wobei die Fettkomponente 50-92 Gew.-% eines flüssigen Pflanzenöls umfasst, ausgewählt unter Sonnenblumenöl, Sojabohnenöl, Rapsöl, Maisöl, Olivenöl, Baumwollsamenöl, Safloröl, Palmolein und Kombinationen davon.

13. Würzkonzentrat nach irgendeinem der vorhergehenden Ansprüche, wobei das Konzentrat eine Wasseraktivität (A_{w}) innerhalb des Bereichs von 0,25-0,50 aufweist, wobei das Konzentrat umfasst:
a) 42-50 Gew.-% Fettkomponente, wobei die Fettkomponente einen Festfettgehalt bei 20°C (N₂₀) von 9-15% aufweist;
b) 7-30 Gew.-% einer teilchenförmigen kristallinen Komponente, ausgewählt unter NaCl, KCl, Saccharose, Mononatriumglutamat und Kombinationen davon, einschließlich mindestens 3 Gewicht-% der Zusammensetzung an kristallinem Salz, ausgewählt unter NaCl, KCl und Kombinationen davon;
c) 15-50 Gew.-% teilchenförmiges Pflanzenmaterial, ausgewählt unter Kräutern, Gewürzen, Gemüse und Kombinationen davon;
d) 5-15 Gew.-% teilchenförmige Stärkekomponente;
e) bis zu 5 Gew.-% Wasser;
wobei die Kombination der Komponenten a) bis e) mindestens 88 Gew.-% des Würzkonzentrats ausmacht und wobei die Fettkomponente enthält:
• 6-15 Gew.-% hochschmelzende Triglyceride, ausgewählt unter PPP, POP und PPO, worin P Palmitinsäure und O Ölsäure darstellt; und
• 70-92 Gew.-% niedrigschmelzende Triglyceride, ausgewählt unter UUU, USU und UUS, worin U ungesättigte C₁₆-C₂₂-Fettsäure darstellt und S gesättigte C₁₀-C₁₈-Fettsäure darstellt.

14. Verfahren zur Herstellung eines Würzkonzentrats nach mindestens einem der vorhergehenden Ansprüche, wobei das Verfahren die Schritte umfasst:
• Mischen einer flüssigen Pflanzenölkomponente, einer teilchenförmigen kristallinen Komponente und eines teilchenförmigen Pflanzenmaterials, um eine Aufschlämmung herzustellen, wobei das flüssige Pflanzenöl ausgewählt ist unter Sonnenblumenöl, Sojabohnenöl, Rapsöl, Maisöl, Olivenöl, Baumwollsamenöl, Safloröl, Palmolein und Kombinationen davon;
• Kombinieren der Aufschlämmung mit einer Palmfettkomponente, ausgewählt unter Palmstearin, Palmsuperstearin, Palmmittelfraktion und Kombinationen davon; und
• Mischen der Kombination der Aufschlämmung und der Palmfettkomponente.

15. Verfahren zur Herstellung eines Gerichts, wobei das Verfahren die Schritte des Mischens von 1 Gewichtsteil des Würzkonzentrats nach irgendeinem der Ansprüche 1-13 mit 1-50 Gewichtsteilen anderer Gerichtskomponenten umfasst.

## Revendications

1. Concentré savoureux présentant une activité d'eau (A_{w}) dans l'intervalle de 0,15-0,6, ledit concentré comprenant :
a) 40-55 % en masse de constituant de graisse, ledit constituant de graisse présentant une teneur solide de graisse à 20°C (N₂₀) de 6-20 % ;
b) 3-30 % en masse d'un constituant cristallin particulaire choisi parmi NaCl, KCI, du saccharose, du glutamate de monosodium et des combinaisons de ceux-ci, incluant au moins 3 % en masse de la composition de sel cristallin choisi parmi NaCl, KCI et des combinaisons de ceux-ci ;
c) 10-50 % en masse de matière végétale particulaire choisie parmi des herbes, des épices, des légumes et des combinaisons de ceux-ci ;
d) 0-22 % en masse de constituant d'amidon particulaire ;
e) jusqu'à 10 % en masse d'eau ;
dans lequel la combinaison des constituants a) à e) constitue au moins 80 % en masse du concentré savoureux, et dans lequel le constituant de graisse contient :
▪ 4-20 % en masse de triglycérides de point de fusion élevé choisis parmi PPP, POP et PPO, dans lesquels P représente l'acide palmitique et O représente l'acide oléique ; et
▪ 50-94 % en masse de triglycérides de faible point de fusion choisis parmi UUU, USU et UUS, dans lesquels U représente un acide gras en C₁₆₋₂₂ insaturé et S représente un acide gras en C₁₀₋₁₈ saturé.

2. Concentré savoureux selon la revendication 1, dans lequel le concentré savoureux présente une activité d'eau inférieure à 0,45.

3. Concentré savoureux selon l'une quelconque des revendications précédentes, dans lequel le concentré savoureux contient au moins 10 % en masse, de préférence au moins 15 % en masse du constituant cristallin particulaire.

4. Concentré savoureux selon l'une quelconque des revendications précédentes, dans lequel le concentré savoureux contient au moins 3 % en masse du constituant cristallin particulaire présentant un diamètre dans l'intervalle de 30 à 1 000 micromètres.

5. Concentré savoureux selon l'une quelconque des revendications précédentes, dans lequel le concentré savoureux contient au moins 4 % en masse, de préférence au moins 5 % en masse de sel choisi parmi NaCl, KCI et des combinaisons de ceux-ci.

6. Concentré savoureux selon l'une quelconque des revendications précédentes, dans lequel le concentré savoureux contient au moins 0,1 % en masse de constituant d'amidon particulaire.

7. Concentré savoureux selon la revendication 6, dans lequel le constituant d'amidon particulaire est de l'amidon physiquement modifié.

8. Concentré savoureux selon l'une quelconque des revendications précédentes, dans lequel la combinaison des constituants a) à e) représente au moins 85 % en masse, de préférence au moins 88 % en masse du concentré savoureux.

9. Concentré savoureux selon l'une quelconque des revendications précédentes, dans lequel le constituant de graisse contient 4-15 % en masse, de préférence 6-13 % en masse de triglycéride PPP.

10. Concentré savoureux selon l'une quelconque des revendications précédentes, dans lequel le constituant de graisse contient au moins 40 % en masse de triglycéride UUU.

11. Concentré savoureux selon l'une quelconque des revendications précédentes, dans lequel le constituant de graisse comprend 8-25 % en masse d'un constituant d'huile de palme choisi parmi la stéarine de palme, la super stéarine de palme, une fraction médiane de palme et des combinaisons de celles-ci.

12. Concentré savoureux selon l'une quelconque des revendications précédentes, dans lequel le constituant de graisse comprend 50-92 % en masse d'une huile végétale liquide choisie parmi de l'huile de tournesol, l'huile de soja, l'huile de colza, l'huile de maïs, l'huile d'olive, l'huile de germe de coton, l'huile de cartame, l'oléine de palme et des combinaisons de celles-ci.

13. Concentré savoureux selon l'une quelconque des revendications précédentes, ledit concentré présentant une activité d'eau (A_{w}) dans l'intervalle de 0,25-0,50, ledit concentré comprenant :
a) 42-50 % en masse de constituant de graisse, ledit constituant de graisse présentant une teneur solide de graisse à 20°C (N₂₀) de 9-15 % ;
b) 7-30 % en masse d'un constituant cristallin particulaire choisi parmi NaCl, KCI, du saccharose, du glutamate de monosodium et des combinaisons de ceux-ci, incluant au moins 3 % en masse de la composition de sel cristallin choisi parmi NaCl, KCI et des combinaisons de ceux-ci ;
c) 15-50 % en masse de matière végétale particulaire choisie parmi des herbes, des épices, des légumes et des combinaisons de ceux-ci ;
d) 5-15 % en masse de constituant d'amidon particulaire ;
e) jusqu'à 5 % en masse d'eau ;
dans lequel la combinaison des constituants a) à e) constitue au moins 88 % en masse du concentré savoureux, et dans lequel le constituant de graisse contient :
▪ 6-15 % en masse de triglycérides de point de fusion élevé choisis parmi PPP, POP et PPO, dans lesquels P représente l'acide palmitique et O représente l'acide oléique ; et
▪ 70-92 % en masse de triglycérides de faible point de fusion choisis parmi UUU, USU et UUS, dans lesquels U représente un acide gras en C₁₆₋₂₂ insaturé et S représente un acide gras en C₁₀₋₁₈ saturé.

14. Procédé de préparation du concentré savoureux selon l'une quelconque des revendications précédentes, ledit procédé comprenant les étapes de :
▪ mélange d'un constituant d'huile végétale liquide, d'un constituant cristallin particulaire et d'un matériau de plante particulaire pour produire une suspension, l'huile végétale liquide étant choisie parmi l'huile de tournesol, l'huile de soja, l'huile de colza, l'huile de maïs, l'huile d'olive, l'huile de germe de coton, l'huile de carthame, l'oléine de palme et des combinaisons de celles-ci ;
▪ combinaisons de la suspension avec un constituant de graisse de palme choisi parmi la stéarine de palme, la super stéarine de palme, une fraction médiane de palme et des combinaisons de celles-ci ; et
▪ mélange de la combinaison de suspension et de constituant de graisse de palme.

15. Procédé de préparation d'un repas, ledit procédé comprenant les étapes de mélange de 1 partie en masse du concentré savoureux selon l'une quelconque des revendications 1-13 avec 1-50 parties en masse d'autres constituants de repas.
